# EUROPEAN PATENT SPECIFICATION

(11) **EP 2 571 078 B1**
(45) Date of publication and mention of the grant of the patent: **22.04.2015**
(21) Application number: 12180261.5
(22) Date of filing: 13.08.2012
(51) Int. Cl.: H01M 2/10, H01M 2/02

(54) **Battery module**
Batteriemodul
Module de batteries

(30) Priority: 15.09.2011 US 201161535001 P; 06.04.2012 US 201213441098
(43) Date of publication of application: 20.03.2013
(73) Proprietor: Samsung SDI Co., Ltd., Gyeonggi-do 449-577 (KR); Robert Bosch GmbH, 70442 Stuttgart (DE)
(72) Inventor: Kim, Myung-Chul, Yongin-si (KR)
(74) Representative: Gulde & Partner

(56) References cited:
- EP-A2- 0 834 952
- EP-A2- 1 753 058
- EP-A2- 2 450 978
- EP-A2- 2 450 979
- US-A1- 2005 285 567
- US-A1- 2008 090 137
- US-A1- 2009 155 675
- US-A1- 2010 304 188

## Description

The present invention relates to a battery module, and more particularly, to a battery module configured to have a new structure, including a plurality of prismatic battery cells.

### Description of the Related Art

Recently, a high-output battery module using a high-energy density non-aqueous electrolyte has been developed. The high-output battery module configures a large-capacity battery module by connecting a plurality of batter cells in series so as to be used for driving a motor such as devices requiring high power, for example, an electric car, or the like.

An appearance of devices adopting the battery module is diversified and thus, the shape of the battery module may also be diversified. In particular, a demand of a light and small-sized battery module has been increased.

EP 2 450 979 A2 is a document falling within the terms of Article 54(3) EPC and which discloses a battery module having two battery arrays each comprising a plurality of battery cells stacked together and a vertical insulating member provided between both battery arrays.

US 2009 155675 A1 is part of the prior art according to Art. 54(2) EPC and discloses a battery module having two battery arrays each comprising a plurality of battery cells stacked together and a central plenum provided between both battery arrays.

US 2010 304188 A1 is also part of the prior art according to Art. 54(2) EPC and discloses a battery carriage.

### SUMMARY OF THE INVENTION

An object of the present invention is to provide a battery module having a new structure.

In addition, another object of the present invention is to provide a battery module capable of improving stability by firmly fixing a battery cell.

According to the present invention there is provided a battery module, including:
a first cell array including a plurality of prismatic battery cells and a second cell array including a plurality of prismatic battery cells, wherein each battery cell includes a first surface with a terminal portion, a second surface facing the first surface and a wide surface connecting the first surface and the second surface and wherein the second surfaces of battery cells of the first array are arranged to face the second surfaces of battery cells of the second array;
at least one support member provided between the first cell array and the second cell array; and
a housing for receiving the first cell array, the second cell array and the at least one support member,
wherein the plurality of battery cells of the first cell array and the second cell array are stacked so that the wide surfaces of the battery cells face each other, wherein the second cell array includes the same number of battery cells as the first cell array, and
, wherein the support member includes a base portion interposed between the battery cells and a flange portion vertically connected to the base portion and the flange portion is e provided so as to correspond to a side of the battery cells.

The support member may have an L-letter shape or a T-letter shape.

According to another preferred embodiment, the battery module includes a first support member and a second support member interposed at a side opposite to each other. The first support member may have a L-letter shape including a base portion interposed between the battery cells and a flange portion vertically connected to the base portion; and the second support member may have a L-letter shape including a base portion interposed between the battery cells and a flange portion vertically connected to the base portion, wherein the flange portion of the first support member is exposed to an opposite direction as the flange portion of the second support member.

The housing may include first and second plates provided so as to face each other, a fourth plate connected to the first and second plates and provided so as to be parallel with the wide surfaces of the battery cells, and a third plate provided so as to face the fourth plate. The support member may be provided so as to contact the third and fourth plates. The support member and the third and fourth plates may include a fastening so as to firmly fix the support member to the third and fourth plates. The fastening may include first and second fastening portions at a portion of the support member contacting the third and fourth plates, third and fourth fastening portions at the third and fourth plates so as to correspond to the first and second fastening portions, and fastening members so as to firmly fix the support member to the third and fourth plates at the first, second, third and forth fastening portions.

Preferably, the support member includes a base portion provided so as to face the second surface of the battery cell and first and second flange portions each connected to one end and the other end of the base portion.

The first and second plates may include first and second flat portions facing the first surface of the battery cell and first and second fixing portions curved in a direction of the battery cell from both sides of the first and second flat portions. The first and second fixing portions may be coupled to the flange portions of the support member.

A height of the support member and a height of the first and second plates may correspond to the height of the first cell array and the second cell array.

As set forth above, the exemplary embodiments of the present invention can provide the battery module having the new structure.

In addition, the exemplary embodiments of the present invention can provide the battery module capable of providing the battery module with the improved stability by firmly fixing the battery cells.

### BRIEF DESCRIPTION OF THE DRAWINGS

The accompanying drawings, together with the specification, illustrate exemplary embodiments of the present invention, and, together with the description, serve to explain the principles of the present invention.
FIG. 1A is a perspective view of a battery module according to an embodiment which does not form part of the presently claimed invention (because the battery module of FIG. 1A only shows two battery cells and does not show two cell arrays each including a plurality of battery cells) but represents background art that is useful to understand the claimed invention.
FIG. 1B is an exploded perspective view of FIG. 1A.
FIG. 2 is a perspective view of a first plate and a battery cell according to FIG. 1B.
FIG. 3A is a perspective view of the battery cell and a support member.
FIG. 3B is an enlarged view of the support member.
FIG. 4A is a perspective view focusing on a support member and a battery cell according to an exemplary embodiment of the present invention.
FIG. 4B is an exploded view of a support member of FIG. 4A.
FIG. 5 is an exploded perspective view of the battery module according to an exemplary embodiment of the present invention.
FIG. 6 is a perspective view of a first plate and a cell array according to the exemplary embodiment.
FIG. 7 is a perspective view of a cell member and a support member.
FIG. 8 is a perspective view of a battery module according to an embodiment which does not form part of the presently claimed invention (because the battery module of FIG. 8 only shows two battery cells and does not show two cell arrays each including a plurality of battery cells) but represents background art that is useful to understand the claimed invention.

### DETAILED DESCRIPTION OF THE INVENTION

In the following detailed description, only certain exemplary embodiments of the present invention, or certain embodiments which do not form part of the presently claimed invention (e.g. because the battery module described only includes two battery cells and does not comprise two cell arrays each including a plurality of battery cells) but represent background art that is useful to understand the claimed invention, have been shown and described, simply by way of illustration.

In describing the embodiment, well-known functions or constructions will not be described in detail since they may unnecessarily obscure the understanding of the present invention. In addition, it will be appreciated that like reference numerals refer to like elements throughout even though they are shown in different figures. Besides, in the figures, the thickness and sizes of each layer may be exaggerated for convenience of description and clarity and may be different from the actual thickness and size.

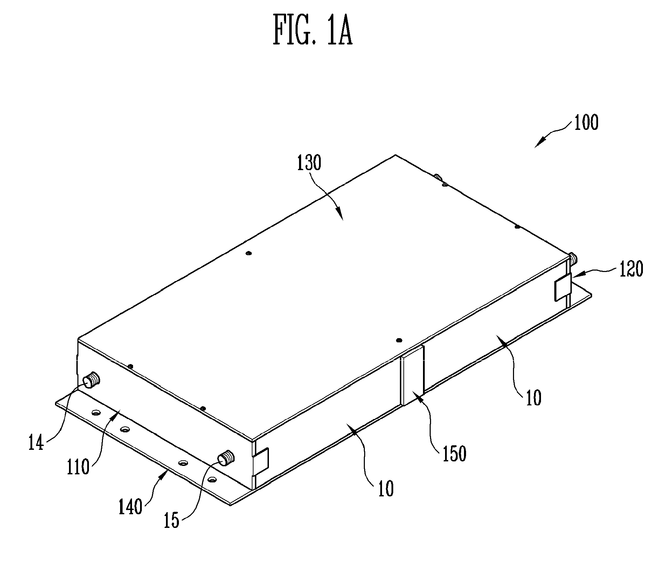

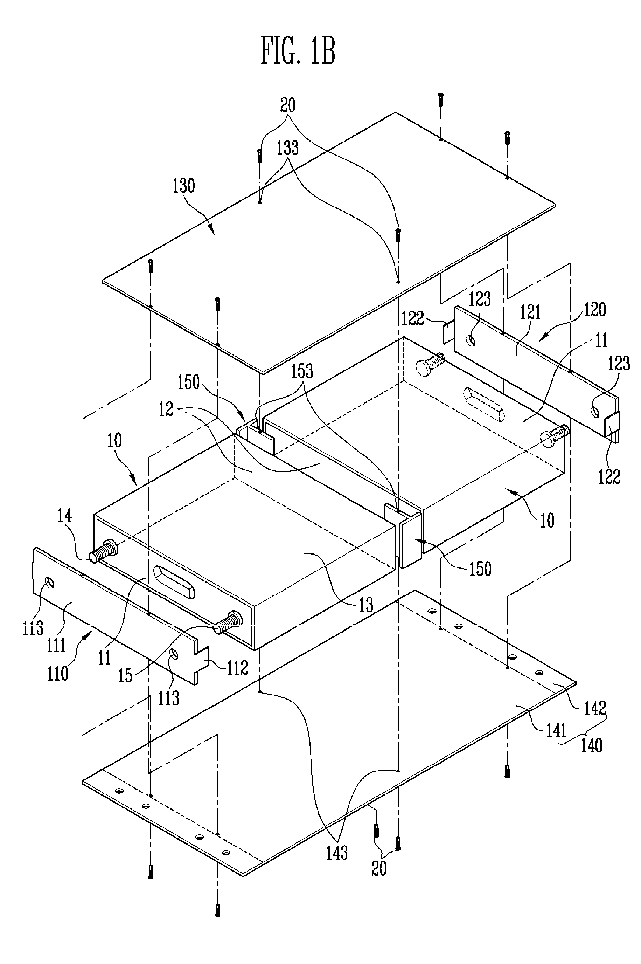

FIG. 1A is a perspective view of a battery module according to an embodiment which does not form part of the presently claimed invention but represents background art that is useful to understand the claimed invention and FIG. 1B is an exploded perspective view of FIG. 1A.

A battery module 100 according to said embodiment includes at least two battery cells 10 including a first surface 11 including terminal portions 14 and 15 and a second surface 12 facing the first surface 11; at least a support member 150 provided between the battery cells 10; and a housing receiving the battery cells 10 and the support member 150, wherein the battery cell 10 is provided so that a wide surface 13 thereof connecting the first surface and the second surface 11 and 12 is parallel with a bottom surface, and the second surfaces 12 of the adjacent battery cells are arranged to face each other and at least a support member 150 is interposed between the second surfaces 12 of the battery cell 10.

The housing includes first and second plates 110 and 120 provided so as to face each other, a fourth plate 140 connected to the first and second plates 110 and 120 and provided so as to be parallel with the bottom surface, and a third plate 130 provided so as to face the fourth plate 140.

The fourth plate 140 is configured to include a cell seating portion 141 provided at a size corresponding to the third plate 130 and a mounting portion 142 provided to extend therefrom and including holes. The cell seating portion 131 is seated with the wide surface 13 of the battery cell 10 and the mounting portion 142 extends from both sides of the cell mounting portion 131 and include the holes. The hole is used to mount the battery module 100 on external devices such as a car, or the like, using a bolt, a stud, or the like. The housing firmly fixes the battery cell 10 and is provided for convenience of use of the battery module 100.

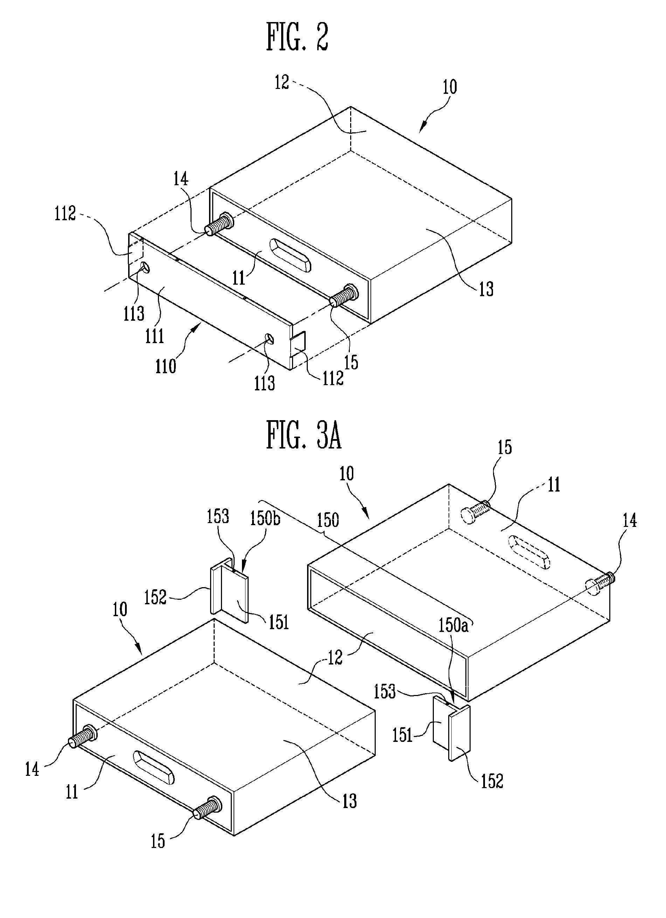

FIG. 2 is a perspective view of a first plate and a battery cell according to FIG. 1B.

Referring to FIGS. 1B and 2, the battery cell 10 is provided between the first and second plates 110 and 120 and the battery cell 10 is provided so that the first surface 11 thereof faces the first or second plate 110 and 120.

The battery cell 10 may be manufactured by receiving an electrode assembly and an electrolyte in a battery case including the second surface 12 and the wide surface 13 and then, sealing the battery case with the first surface 11. For example, the first surface 11 may include a cap assembly, or the like. The first surface 11 may be provided with the terminal portions 14 and 15 and the terminal portions 14 and 15 may include a positive terminal 14 and a negative terminal 15 that are disposed at both ends of the first surface 11. The electrode assembly is connected to the positive terminal 14 and the negative terminal 15 and the electrochemical energy generated from the inside of the battery cell 10 may be transferred to the outside through the positive terminal 14 and the negative terminal 15.

The first and second plates 110 and 120 include first and second flat portions 111 and 121 facing the first surface of the battery cell 10 and first and second fixing portions 112 and 122 curved in a direction of the battery cell 10 from both sides of the first and second flat portions 111 and 121. The first and second plates 110 and 120 include at least first and second terminal holes 113 and 123 that are disposed to correspond to the terminal portions 14 and 15. The second plate 120 is disposed to correspond to the first plate 110, and therefore, the exemplary embodiment will be described based on the first plate 110. The first flat portion 111 of the first plate 110 is disposed to correspond to the first surface 11 of the battery cell 10 and the first fixing portion 112 is disposed to cover the side of the battery cell 10. The first flat portion 111 and the first fixing portion 112 may firmly fix the battery cell 10 without using a separate fastening member and therefore, the manufacturing process of the battery module 100 may be simplified. In addition, the first flat portion 110 is provided with the first terminal hole 113. The first terminal hole 113 exposes the terminal portions 14 and 15 of the battery cell 10 to the outside and therefore, facilitate the electrical connection between the adjacent battery modules 100. In addition, the first terminal hole 113 disposed to correspond to the terminal portions 14 and 15 guide the position of the battery cell 10, thereby improving the manufacturing efficiency of the battery module 100.

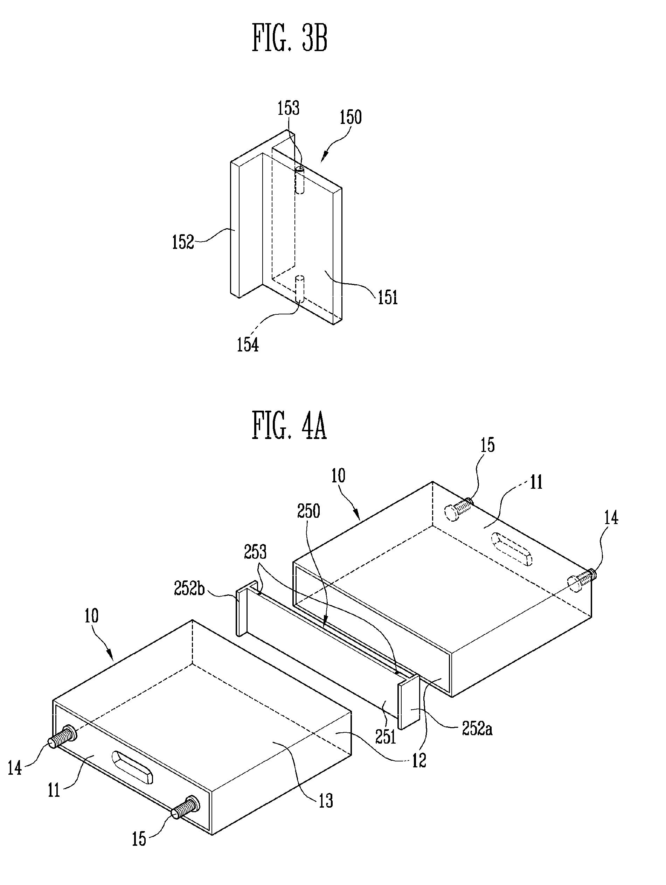

FIG. 3A is a perspective view of a battery cell and a support member and FIG. 3B is an enlarged view of the support member.

Referring to FIGS. 1B and FIGS. 3A and 3B, the battery cell 10 is provided so that the wide surface 13 of the battery cell 10 is parallel with the bottom surface, and the second surfaces 12 of the adjacent battery cells are arranged to face each other. In addition, at least support port 150 may be interposed between the second surfaces 12 of the battery cell 10.

The support member 150 includes a base portion 151 interposed between the battery cells 10 and a flange portion 152 vertically connected to the base portion 151. In this case, the base portion 151 is connected to the center of the flange portion 152 and the support member 150 has a T-letter shape. The support member 150 includes first and second support members 150a and 150b and the first and second support members 150a and 150b are interposed at a side opposite to each other.

The support member 150 is provided so as to contact the third and fourth plates 130 and 140 and the length of the base portion 151 approximately corresponds to the second surface of the battery cell 10. In addition, the support member 150 includes first and second fastening portions 153 and 154 at a portion contacting the third and fourth plates 130 and 140 and the third and fourth plates 130 and 140 are provided with third and fourth fastening portions 133 and 143 so as to correspond to the first and second fastening portions 153 and 154 and thus, is fastened by a separate fastening member. For example, the fastening member 20 may include a bolt, a stud, or the like. The first and second fastening portions 153 and 154 and the third and fourth fastening portions 133 and 143 are fastened by the fastening member 20 and the support member 150 are firmly fixed to the third and fourth plates 130 and 140. That is, the support member 150 maintains a space between the third and fourth plates 130 and 140 to maintain the shape of the battery module 100.

In addition, the flange portion 152 is provided so as to correspond to the side of the adjacent battery cells 10 and fixes the position of the battery cell 10. The support member 150 is fixed by the first to fourth fastening portions 153, 154, 133, and 143 and surrounds the side of the battery cell 10 of the flange portion 152, thereby preventing the separation of the side portion of the battery cell 10. The battery module 100 omits a separate member for fixing the side portion of the battery cell 10 by the support member 150 and thus, the lightness of the battery module 100 may be implemented.

Hereinafter, an exemplary embodiments of the present invention will be described with reference to FIGS. 4A to 7.

Except for the following contents, these exemplary embodiments of the present invention are similar to the contents described in the embodiment described FIGS. 1A, to 3B which does not form part of the presently claimed invention but represents background art that is useful to understand the claimed invention. The detailed description of previously described elements will therefore be omitted when possible.

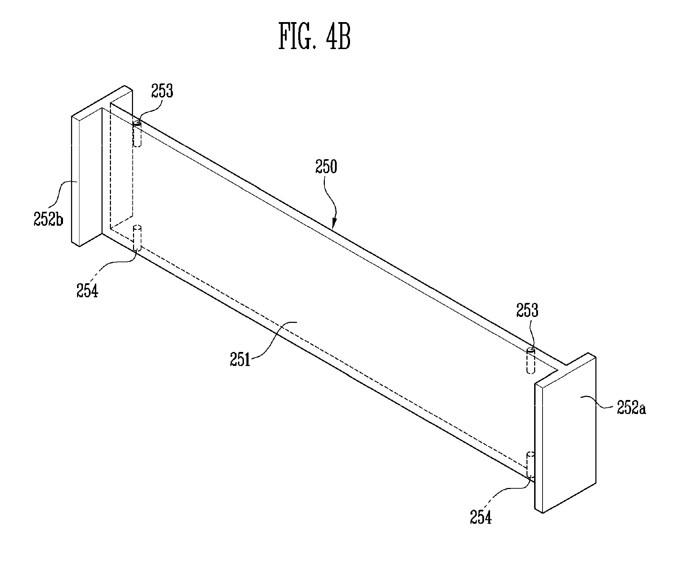

FIG. 4A is a perspective view a support member and a battery cell according to another exemplary embodiment of the present invention and FIG. 4B is an enlarged view of a support member of FIG. 4A.

Referring to FIGS. 4A and 4B, the adjacent battery cells 10 are arranged so that the second surfaces 12 of the battery cells 10 face each other and the support member 250 is interposed between the second surfaces 12.

The support member 250 includes a base portion 251 provided so as to face the second surface 12 of the battery cell 10 and first and second flange portions 252a and 252b each connected to one end and the other end of the base portion 251.

In addition, the size of the base portion 251 is provided so as to the size of the second surface 12 of the battery cell 10. The battery cell 10 is inserted into the base portion 251 and the first and second flange portions 252a and 252b and the battery cell 10 may be easily arranged. In addition, all the side portions of the battery cell 10 are fixed without a separate member and the stability of the battery module 100 is improved. The support member 250 is further provided with the first fastening portion 253 and the second fastening portion 254 for fastening the third and fourth plates and thus, the fixing force of the battery cell may be more improved.

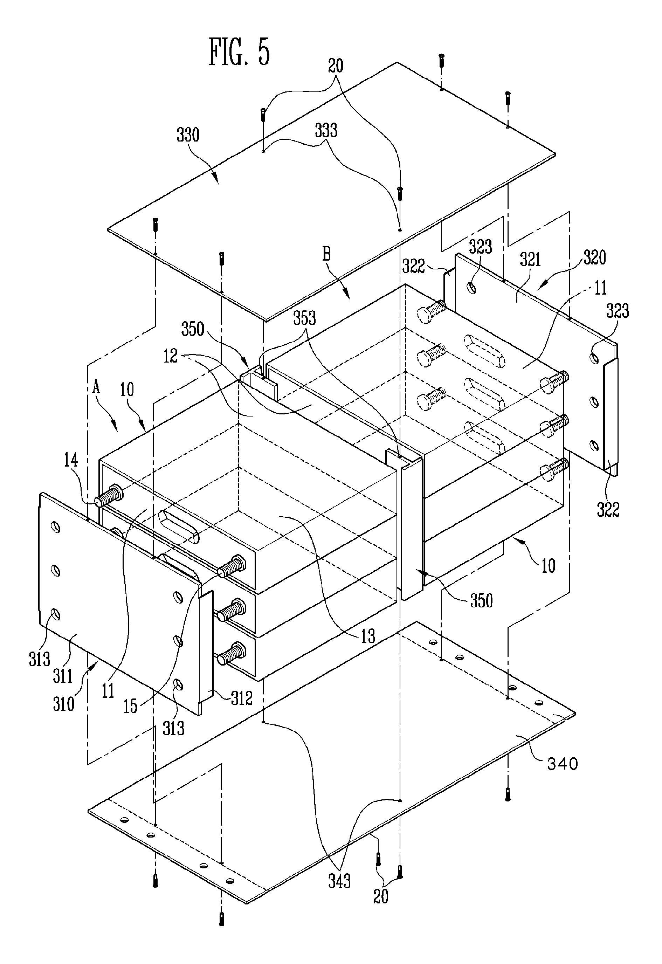

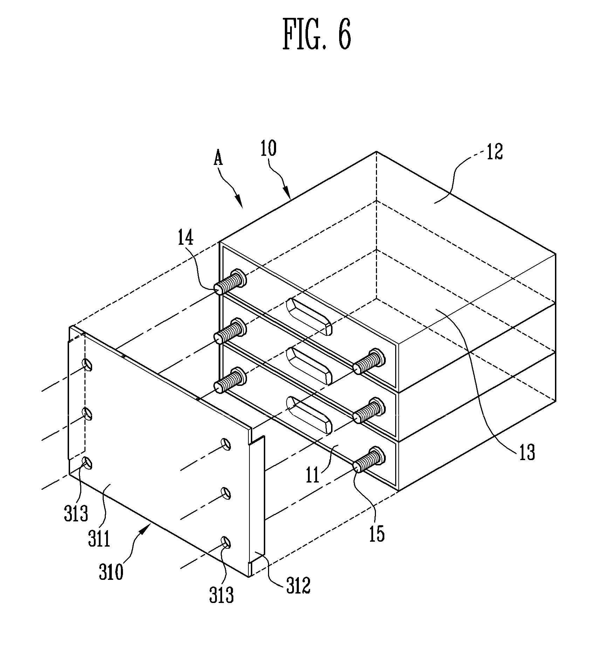

FIG. 5 is an exploded perspective view of the battery module according to another exemplary embodiment of the present invention and FIG. 6 is a perspective view of a first plate and a cell array according to the exemplary embodiment of the present invention.

Referring to FIGS. 5 and 6, the battery module according to the exemplary embodiment of the present invention includes cell arrays A and B that are stacked so that the wide surfaces 13 of the plurality of battery cells 10 face each other, wherein the cell arrays A and B includes a first cell array A and a second array B and the first and second cell arrays A and B are arranged so that the second surface 12 of the battery cells 10 face each other. In addition, the support member 350 may be interposed between the first and second cell arrays A and B and the cell arrays A and B and the support member 350 are fixed by the first to fourth plates 310, 320, 330, and 340.

The battery cell 10 is stacked on the third plate 340 in one direction and are configured to include the first and second cell arrays A and B. The first and second cell arrays A and B are configured so that the same number of battery cells 10 are stacked to have a height corresponding to each other. In this case, the battery cell 10 are stacked so that the first surface 10 of the battery cell 10 faces the first plate 310.

The first plate 310 is provided to have a size corresponding to the first cell array A so as to surround the first cell array A and the second plate 320 is provided to have a size corresponding to the second cell array B so as to surround the second array B. The first and second cell arrays A and B are provided at the corresponding height and thus, the first and second plates 310 and 320 are provided at the corresponding size. The first and second plates 310 and 320 include first and second flat parts 311 and 321 and first and second fixing portions 312 and 322 curved from the first and second flat portions 311 and 321. In addition, the first and second flat portions 31 and 321 of the first and second plates 310 and 320 are further provided with at least firs and second terminal holes 113 and 123. Hereinafter, the first plate 310 will be mainly described. Although not separately described, the second plate 320 may be provided in a shape corresponding to the first plate 310.

Referring to FIG. 6, the terminal portions 14 and 15 of the battery cells 10 configuring the first cell array A are inserted into the first terminal hole 313 of the first plate 310 so as to be exposed to the outside.

Generally, in the case of the battery module including the cell array configured of stacking the plurality of battery cells, the arrangement between the battery cells is not facilitated, which may be a cause of defects of the battery module. On the other hand, since the battery module according to the exemplary embodiment of the present invention guides the position of the cell array by the insertion between the terminal portions 14 and 15 and the first terminal hole 313, the arrangement between the battery cells is easily implemented, thereby improving the productivity.

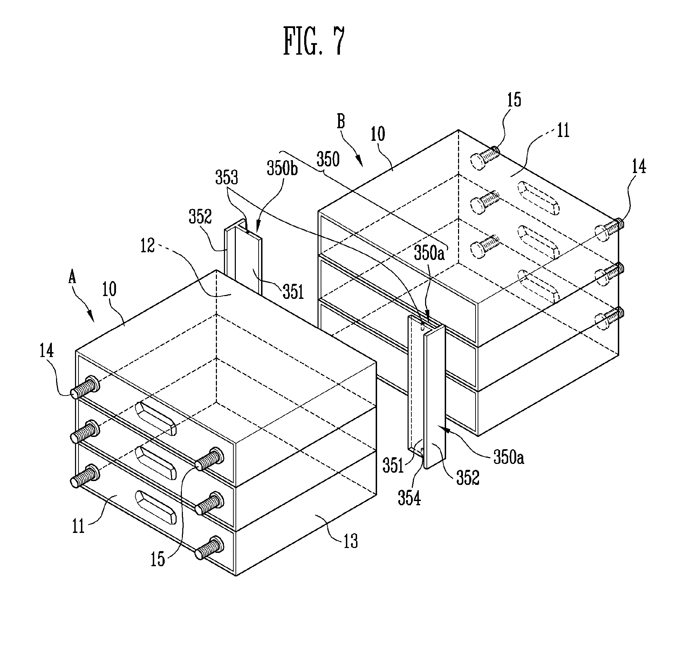

FIG. 7 is a perspective view of a cell array and a support member. Referring to FIGS. 5 and 7, the first and second support members 350 (350a, 350b in FIG. 7) according to the exemplary embodiment of the present invention includes the base portion 351 interposed between the first and second cell arrays A and B and the flange portion 352 vertically connected to the base portion 351. The base portion 351 and the flange portion 352 are provided so as to correspond to the first and second cell arrays A and B and fix the first and second cell arrays A and B together with the first and second plates 310 and 320.

The support member 350 is provided so as to contact the third and fourth plates 330 and 340 and the first and second fastening portions 353 and 354 are provided at a portion contacting each other. The third and fourth plates 330 and 340 are provided with the third and fourth fastening portions 333 and 343 so as to correspond to the first and second fastening portions 353 and 354 and are fastened by the separate fastening member 20.

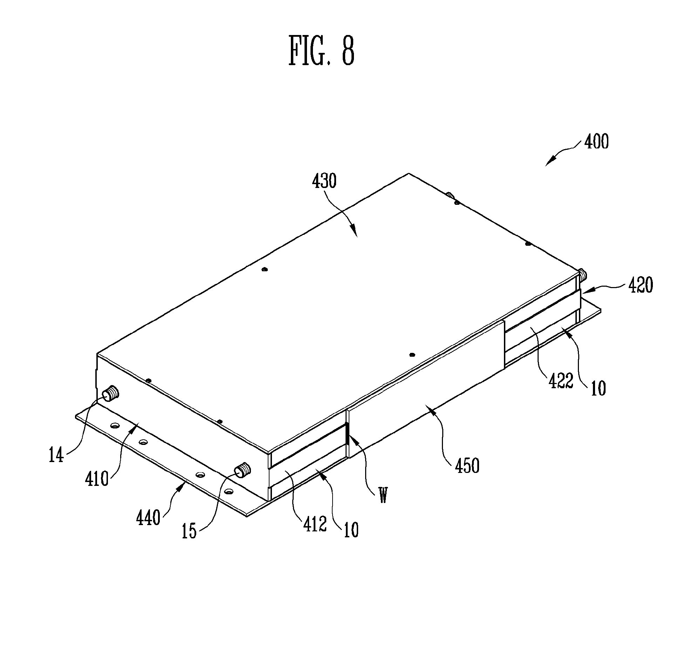

FIG. 8 is a perspective view of a battery module according to an embodiment which does not form part of the presently claimed invention but represents background art that is useful to understand the claimed invention. Referring to FIG. 8, the battery module 400 according to said embodiment includes a housing comprising first and second plates 410 and 420 provided so as to face each other, a fourth plate 440 connected to the first and second plates 410 and 420 and provided so as to be parallel with a third plate 430 provided so as to face the fourth plate 440. The first and second plates 410 and 420 include flat portions facing the first surface of the battery cell 10 and first and second fixing portions 412 and 422 curved in a direction of the battery cell 10 from both sides of the flat portions. The support member 450 includes a base portion (not shown) interposed between the battery cells 10 and a flange portion vertically connected to the base portion. The support member 450 has a T-letter shape. The first and second fixing portions 412 and 422 are coupled to the flange portion of the support member 450. A height of the support member 450 and the first and second plates 410 and 420 corresponds to the height of the battery cells 10. A height W of the fixing portions 412 and 422 is less than the height of the first and second plates 410, 420.

## Claims

1. A battery module (100), including:
a first cell array (A) including a plurality of prismatic battery cells (10) and a second cell array (B) including a plurality of prismatic battery cells (10), wherein each battery cell (10) includes a first surface (11) with a terminal portion (14, 15), a second surface (12) facing the first surface (11) and a wide surface (13) connecting the first surface (11) and the second surface (12) and wherein the second surfaces (12) of battery cells (10) of the first array (A) are arranged to face the second surfaces (12) of battery cells (10) of the second array (B);
at least one support member (250, 350) provided between the first cell array (A) and the second cell array (B); and
a housing for receiving the first cell array (A), the second cell array (B) and the at least one support member (250, 350),
wherein the plurality of battery cells (10) of the first cell array (A) and of the second cell array (B) are stacked so that the wide surfaces of the battery cells (10) face each other,
wherein the second cell array (B) includes the same number of battery cells (10) as the first cell array (A), and
wherein the support member (250, 350) includes a base portion (251, 351) interposed between the battery cells (10) and a flange portion (252, 352) vertically connected to the base portion (251, 351) and provided so as to correspond to a side of the battery cells (10).

2. The battery module of claim 1, wherein the support member (350) has an L-letter shape or a T-letter shape.

3. The battery module of any of the preceding claims, wherein the battery module (100) includes a first support member (350a) and a second support member (350b) interposed at a side opposite to each other.

4. The battery module of claim 3, wherein the first support member (350a) has a L-letter shape including a base portion (351) interposed between the battery cells (10) and a flange portion (352) vertically connected to the base portion (351); and
the second support member (350b) has a L-letter shape including a base portion (351) interposed between the battery cells (10) and a flange portion (352) vertically connected to the base portion (351),
wherein the flange portion (352) of the first support member (350a) is exposed to an opposite direction as the flange portion (352) of the second support member (350b).

5. The battery module of any of the preceding claims, wherein the housing includes first and second plates (310, 320) provided so as to face each other, a fourth plate (340) connected to the first and second plates (310, 320) and provided so as to be parallel with the wide surfaces (13) of the battery cells (10), and a third plate (330) provided so as to face the fourth plate (340).

6. The battery module of claim 5, wherein the support member (350) is provided so as to contact the third and fourth plates (330, 340).

7. The battery module of claim 5 or 6, wherein the support member (350) and the third and fourth plates (330, 340) include a fastening so as to firmly fix the support member (350) to the third and fourth plates (330, 340).

8. The battery module of claim 7, wherein the fastening includes first and second fastening portions (353, 354) at a portion of the support member (350) contacting the third and fourth plates (330, 340), third and fourth fastening portions (333, 343) at the third and fourth plates (330, 340) so as to correspond to the first and second fastening portions (353, 354), and fastening members (20) so as to firmly fix the support member (350) to the third and fourth plates (330, 340) at the first, second, third and forth fastening portions (353, 354, 333, 343).

9. The battery module of claim 1, wherein the support member (250) includes a base portion (251) provided so as to face the second surface (12) of the battery cell (10) and first and second flange portions (252a, 252b) each connected to one end and the other end of the base portion (251).

10. The battery module of claim 5, wherein the first and second plates (310, 320) include first and second flat portions (311, 321) facing the first surface of the battery cell (10) and first and second fixing portions (312, 322) curved in a direction of the battery cell (10) from both sides of the first and second flat portions (311, 321).

11. The battery module of claim 10, wherein the first and second fixing portions (412, 422) are coupled to the flange portions of the support member (450).

12. The battery module of claim 1, wherein a height of the support member (350) and a height of the first and second plates (310, 320) correspond to the height of the first cell array (A) and the second cell array (B).

## Patentansprüche

1. Batteriemodul (100), umfassend:
ein erstes Zellenarray (A) enthaltend eine Vielzahl von prismatischen Batteriezellen (10) sowie ein zweites Zellenarray (B) enthaltend eine Vielzahl von prismatischen Batteriezellen (10), wobei jede Batteriezelle (10) eine erste Fläche (11) mit einem Anschlussklemmenabschnitt (14, 15), eine der ersten Fläche (11) zugewandte zweite Fläche (12) und eine die erste Fläche (11) mit der zweiten Fläche (12) verbindende breite Fläche (13) aufweist, und wobei die zweiten Flächen (12) von Batteriezellen (10) des ersten Arrays (A) so angeordnet sind, dass sie den zweiten Flächen (12) von Batteriezellen (10) des zweiten Arrays (B) zugewandt sind;
mindestens ein Stützelement (250, 350), das zwischen dem ersten Zellenarray (A) und dem zweiten Zellenarray (B) vorgesehen ist; und
ein Gehäuse zum Aufnehmen des ersten Zellenarrays (A), des zweiten Zellenarrays (B) und des mindestens einen Stützelements (250, 350),
wobei die Vielzahl von Batteriezellen (10) des ersten Zellenarrays (A) und des zweiten Zellenarrays (B) gestapelt sind, so dass die breiten Flächen der Batteriezellen (10) einander zugewandt sind,
wobei das zweite Zellenarray (B) dieselbe Anzahl an Batteriezellen (10) aufweist wie das erste Zellenarray (A), und
wobei das Stützelement (250, 350) einen zwischen die Batteriezellen (10) geschalteten Basisabschnitt (251, 351) aufweist sowie einen Flanschabschnitt (252, 352),
der senkrecht mit dem Basisabschnitt (251, 351) verbunden und vorgesehen ist, um einer Seite der Batteriezellen (10) zu entsprechen.

2. Batteriemodul nach Anspruch 1, wobei das Stützelement (350) die Form des Buchstabens L oder die Form des Buchstabens T aufweist.

3. Batteriemodul nach einem der vorstehenden Ansprüche, wobei das Batteriemodul (100) ein erstes Stützelement (350a) und ein zweites Stützelement (350b) aufweist, die einander gegenüberliegend auf einer Seite zwischengeschaltet sind.

4. Batteriemodul nach Anspruch 3, wobei das erste Stützelement (350a) die Form des Buchstabens L aufweist, mit einem zwischen die Batteriezellen (10) geschalteten Basisabschnitt (351) und einem Flanschabschnitt (352), der senkrecht mit dem Basisabschnitt (351) verbunden ist; und
das zweite Stützelement (350b) die Form des Buchstabens L aufweist, mit einem zwischen die Batteriezellen (10) geschalteten Basisabschnitt (351) und einem Flanschabschnitt (352), der senkrecht mit dem Basisabschnitt (351) verbunden ist; wobei der Flanschabschnitt (352) des ersten Stützelements (350a) einer dem Flanschabschnitt (352) des zweiten Stützelements (350b) entgegengesetzten Richtung ausgesetzt ist.

5. Batteriemodul nach einem der vorstehenden Ansprüche, wobei das Gehäuse eine erste und eine zweite Platte (310, 320) aufweist, die so vorgesehen sind, dass sie einander zugewandt sind, eine vierte Platte (340), die mit der ersten und zweiten Platte (310, 320) verbunden und vorgesehen ist, zu den breiten Flächen (13) der Batteriezellen (10) parallel zu liegen, und eine dritte Platte (330), die so vorgesehen ist, dass sie der vierten Platte (340) zugewandt ist.

6. Batteriemodul nach Anspruch 5, wobei das Stützelement (350) so vorgesehen ist, dass es mit der dritten und vierten Platte (330, 340) in Kontakt ist.

7. Batteriemodul nach Anspruch 5 oder 6, wobei das Stützelement (350) sowie die dritte und vierte Platte (330, 340) eine Befestigung aufweisen, um das Stützelement (350) fest an der dritten und vierten Platte (330, 340) zu befestigen.

8. Batteriemodul nach Anspruch 7, wobei die Befestigung erste und zweite Befestigungsabschnitte (353, 354) an einem Abschnitt des Stützelements (350) aufweist, der mit der dritten und vierten Platte (330, 340) in Kontakt ist, dritte und vierte Befestigungsabschnitte (333, 343) an der dritten und vierten Platte (330, 340), um den ersten und zweiten Befestigungsabschnitten (353, 354) zu entsprechen, sowie Befestigungselemente (20), um das Stützelement (350) an der dritten und vierten Platte (330, 340) fest an den ersten, zweiten, dritten und vierten Befestigungsabschnitten (353, 354, 333, 343) zu befestigen.

9. Batteriemodul nach Anspruch 1, wobei das Stützelement (250) einen Basisabschnitt (251) aufweist, der vorgesehen ist, um der zweiten Fläche (12) der Batteriezelle (10) zugewandt zu sein, sowie erste und zweite Flanschabschnitte (252a, 252b), die jeweils mit einem Ende und dem anderen Ende des Basisabschnitts (251) verbunden sind.

10. Batteriemodul nach Anspruch 5, wobei die erste und zweite Platte (310, 320) erste und zweite flache Abschnitte (311, 321) aufweisen, die der ersten Fläche der Batteriezelle (10) zugewandt sind, sowie erste und zweite Befestigungsabschnitte (312, 322), die in eine Richtung der Batteriezelle (10) von beiden Seiten der ersten und zweiten flachen Abschnitte (311, 321) abgebogen sind.

11. Batteriemodul nach Anspruch 10, wobei die ersten und zweiten Befestigungsabschnitte (412, 422) mit den Flanschabschnitten des Stützelements (450) verbunden sind.

12. Batteriemodul nach Anspruch 1, wobei eine Höhe des Stützelements (350) und eine Höhe der ersten und zweiten Platte (310, 350) der Höhe des ersten Zellenarrays (A) und des zweiten Zellenarrays (B) entsprechen.

## Revendications

1. Module de batterie (100), comportant :
un premier réseau de cellules (A) comportant une pluralité de cellules de batterie prismatiques (10) et un deuxième réseau de cellules (B) comportant une pluralité de cellules de batterie prismatiques (10), où chaque cellule de batterie (10) comporte une première surface (11) avec une partie terminale (14, 15), une deuxième surface (12) faisant face à la première surface (11) et une surface large (13) reliant la première surface (11) et la deuxième surface (12) et où les deuxièmes surfaces (12) de cellules de batterie (10) du premier réseau (A) sont agencées pour faire face aux deuxièmes surfaces (12) de cellules de batterie (10) du deuxième réseau (B) ;
au moins un élément de support (250, 350) prévu entre le premier réseau de cellules (A) et le deuxième réseau de cellules (B) ; et
un boîtier pour recevoir le premier réseau de cellules (A), le deuxième réseau de cellules (B) et l'au moins un élément de support (250, 350),
dans lequel la pluralité de cellules de batterie (10) du premier réseau de cellules (A) et du deuxième réseau de cellules (B) sont empilées de sorte que les surfaces larges des cellules de batterie (10) se fassent face, où le deuxième réseau de cellules (B) comporte le même nombre de cellules de batterie (10) que le premier réseau de cellules (A), et
dans lequel l'élément de support (250, 350) comporte une partie de base (251, 351) interposée entre les cellules de batterie (10) et une partie de rebord (252, 352) verticalement reliée à la partie de base (251, 351) et prévue de manière à correspondre à un côté des cellules de batterie (10).

2. Module de batterie de la revendication 1, dans lequel l'élément de support (350) a une forme de lettre L ou une forme de lettre T.

3. Module de batterie de l'une des revendications précédentes, dans lequel le module de batterie (100) comporte un premier élément de support (350a) et un deuxième élément de support (350b) interposés au niveau d'un côté de manière opposée l'un à l'autre.

4. Module de batterie de la revendication 3, dans lequel le premier élément de support (350a) a une forme de lettre L comportant une partie de base (351) interposée entre les cellules de batterie (10) et une partie de rebord (352) verticalement reliée à la partie de base (351) ; et
le deuxième élément de support (350b) a une forme de lettre L comportant une partie de base (351) interposée entre les cellules de batterie (10) et une partie de rebord (352) verticalement reliée à la partie de base (351),
dans lequel la partie de rebord (352) du premier élément de support (350a) est exposée à une direction opposée à celle de la partie de rebord (352) du deuxième élément de support (350b).

5. Module de batterie de l'une des revendications précédentes, dans lequel le boîtier comporte des première et deuxième plaques (310, 320) prévues de manière à se faire face, une quatrième plaque (340) reliée aux première et deuxième plaques (310, 320) et prévue de manière à être parallèle avec les surfaces larges (13) des cellules de batterie (10) et une troisième plaque (330) prévue de manière à faire face à la quatrième plaque (340).

6. Module de batterie de la revendication 5, dans lequel l'élément de support (350) est prévu de manière à entrer en contact avec les troisième et quatrième plaques (330, 340).

7. Module de batterie de la revendication 5 ou 6, dans lequel l'élément de support (350) et les troisième et quatrième plaques (330, 340) comportent une fixation de manière à fixer fermement l'élément de support (350) aux troisième et quatrième plaques (330, 340).

8. Module de batterie de la revendication 7, dans lequel la fixation comporte des première et deuxième parties de fixation (353, 354) au niveau d'une partie de l'élément de support (350) en contact avec les troisième et quatrième plaques (330, 340), des troisième et quatrième parties de fixation (333, 343) au niveau des troisième et quatrième plaques (330, 340) de manière à correspondre aux première et deuxième parties de fixation (353, 354) et des éléments de fixation (20) de manière à fixer fermement l'élément de support (350) aux troisième et quatrième plaques (330, 340) au niveau des première, deuxième, troisième et quatrième parties de fixation (353, 354, 333, 343).

9. Module de batterie de la revendication 1, dans lequel l'élément de support (250) comporte une partie de base (251) prévue de manière à faire face à la deuxième surface (12) de la cellule de batterie (10) et des première et deuxième parties de rebord (252a, 252b) chacune reliée à une extrémité et à l'autre extrémité de la partie de base (251).

10. Module de batterie de la revendication 5, dans lequel les première et deuxième plaques (310, 320) comportent des première et deuxième parties plates (311, 321) faisant face à la première surface de la cellule de batterie (10) et des première et deuxième parties de fixation (312, 322) incurvées dans une direction de la cellule de batterie (10) à partir des deux côtés des première et deuxième parties plates (311, 321).

11. Module de batterie de la revendication 10, dans lequel les première et deuxième parties de fixation (412, 422) sont couplées aux parties de rebord de l'élément de support (450).

12. Module de batterie de la revendication 1, dans lequel la hauteur de l'élément de support (350) et la hauteur des première et deuxième plaques (310, 320) correspondent à la hauteur du premier réseau de cellules (A) et du deuxième réseau de cellules (B).
